# EUROPÄISCHE PATENTSCHRIFT

(11) **EP 2 479 095 B1**
(45) Veröffentlichungstag und Bekanntmachung des Hinweises auf die Patenterteilung: **25.07.2018**
(21) Anmeldenummer: 12000423.9
(22) Anmeldetag: 24.01.2012
(51) Int. Cl.: B62K 25/04

(54) **Stossdämpfer für ein Fahrrad**
Shock absorber for a bicycle
Amortisseur pour un vélo

(30) Priorität: 25.01.2011 DE 102011009405
(43) Veröffentlichungstag der Anmeldung: 25.07.2012
(73) Patentinhaber: DT Swiss AG, 2500 Biel (CH)
(72) Erfinder: Battlogg, Stefan, 6771 St.Anton i.M. (AT); Pösel, Jürgen, 6700 Bludenz (AT); Elsensohn, Gernot, 6771 St. Anton i.M. (AT); Walthert, Martin, 3270 Aaberg (AT)
(74) Vertreter: BSB Patentanwälte Schütte & Engelen Partnerschaft mbB

(56) Entgegenhaltungen:
- EP-A2- 1 398 266
- EP-A2- 1 818 250
- GB-A- 2 461 892
- US-A1- 2004 061 303
- US-A1- 2006 064 223
- US-A1- 2009 192 673
- US-A1- 2010 320 703
- US-A1- 2010 327 542

## Beschreibung

Die vorliegende Erfindung betrifft einen Stoßdämpfer für ein wenigstens teilweise muskelbetriebenes Fahrzeug und insbesondere ein Fahrrad. Dabei umfasst der Stoßdämpfer eine Dämpfereinrichtung mit einer ersten und einer zweiten Dämpferkammer, die über wenigstens ein steuerbares Drosselventil miteinander in Verbindung stehen.

Es sind im Stand der Technik verschiedenste Fahrraddämpfer bekannt geworden, die zur Dämpfung von Stößen dienen. Solche Stoßdämpfer können als Hinterraddämpfer zur Dämpfung von Stößen der Hinterräder eingesetzt werden oder sie werden als Federgabeln ausgeführt und dienen zur Dämpfung der Stöße an Vorderrädern. Dämpfer für Fahrräder werden z. B. mit einem Dämpfungsfluid, wie beispielsweise Öl betrieben. Zur Dämpfung wird das Dämpfungsfluid von einer ersten Dämpferkammer über eine Blende gedrosselt zu einer zweiten Dämpfungskammer geleitet. Die Größe der Öffnung der Blende bestimmt die Stärke der Dämpfung. Bei der Anwendung an Fahrrädern ist es erwünscht, die Stärke der Dämpfung lastabhängig einzustellen. So können beispielsweise kleinere Stöße weniger stark gedämpft werden als starke Stöße.

Die optimale Dämpfung hängt auch von den Eigenschaften des Geländes ab. Bei Fahrten über eine Straße, über einen Waldweg oder direkt durch das Gelände sind jeweils unterschiedliche Dämpfungseinstellungen optimal.

Zur Steuerung solcher Dämpfer in Echtzeit sind deshalb elektrisch steuerbare Drosselventile an solchen Stoßdämpfern bekannt geworden. Die US 2009/019 2673 A1 offenbart beispielsweise ein Fahrrad mit einem steuerbaren Dämpfer. Der Dämpfer umfasst ein verstellbares Ventil, wobei die Größe der Öffnung des Ventils durch einen elektrischen Motor gesteuert wird. Das Dämpfersystem der US 2009/019 2673 ist der nächstliegende Stand der Technik und offenbart die Merkmale des Oberbegriffs des Anspruchs 1, und weist zudem ein Bedienteil auf, über welches ein Benutzer Einstellungen vornehmen kann. An das System kann auch ein Computer bzw. Laptop angeschlossen werden.

Bekannt geworden sind auch Stoßdämpfer für Fahrräder, die mit einem magnetorheologischen Fluid als Dämpfungsfluid betrieben werden. In einem Dämpfungskanal eines steuerbaren Drosselventils kann dabei ein Magnetfeld erzeugt werden, welches zu einer Verkettung der Partikel im magnetorheologischen Fluid entlang der Feldlinien des Magnetfeldes führt, wodurch der Durchfluss durch das Drosselventil entsprechend gedämpft wird.

Bei allen elektrisch steuerbaren Stoßdämpfern ist der Einsatz von elektrischer Energie zur Steuerung der Stoßdämpfer nötig. Um den Betrieb eines solchen Stoßdämpfers unabhängig von einem Generator wie beispielsweise einem Fahrraddynamo aufrecht zu erhalten, wird deshalb regelmäßig eine Batterie vorgesehen, die die benötigte Energie bereitstellt.

Elektrisch steuerbare Stoßdämpfer ermöglichen eine echtzeitgesteuerte Betriebsweise des Stoßdämpfers. Dabei können Sensorsignale ausgewertet werden. Praktisch sofort kann auf veränderte Umgebungsbedingungen reagiert werden, um die gewünschten oder optimalen Bedingungen einzustellen.

Solche flexibel steuerbaren Stoßdämpfer ermöglichen die Einstellung und Veränderung vieler Parameter. Eine ungünstige Kombination unterschiedlicher Parameter kann dabei zu unerwünschten oder sogar ungünstigen Ergebnissen führen. Anfänger können von einer großen Zahl von Einstellmöglichkeiten überfordert werden.

Es ist deshalb für Anfänger ein Stoßdämpfer sinnvoll, der nur wenige oder nur die wichtigsten Einstellmöglichkeiten zur Verfügung stellt. Fortgeschrittene Benutzer oder Experten erwarten hingegen eine größere Zahl von Einstellmöglichkeiten und sind sich bewusst, dass eine Kombination ungünstiger Einstellungen auch zu einem schlechteren Ergebnis führen kann. Aufgrund ihrer Erfahrungen wissen sie solche Einstellungen zu vermeiden. Für fortgeschrittene Benutzer oder Experten ist deshalb ein Stoßdämpfer wünschenswert, der viele Einstellmöglichkeiten zulässt.

Nachteilig ist es allerdings, dass ein Anfänger der zunächst ein Modell mit weniger Einstellmöglichkeiten gekauft hat, sich später einen neuen Stoßdämpfer kaufen muss, um weitere Einstellmöglichkeiten zu erhalten.

Es ist deshalb die Aufgabe der vorliegenden Erfindung, einen Stoßdämpfer für ein wenigstens teilweise muskelbetriebenes Fahrzeug und insbesondere ein Fahrrad zur Verfügung zu stellen, dessen Einsatz sowohl von Anfängern als auch von fortgeschrittenen Benutzern oder Experten möglich ist.

Diese Aufgabe wird gelöst durch einen Stoßdämpfer mit den Merkmalen des Anspruchs 1. Bevorzugte Merkmale sind Gegenstand der Unteransprüche. Weitere Vorteile und Merkmale ergeben sich aus der allgemeinen Beschreibung der Erfindung und der Beschreibung des Ausführungsbeispiels.

Der erfindungsgemäße Stoßdämpfer für ein wenigstens teilweise muskelbetriebenes Fahrzeug und insbesondere ein Fahrrad umfasst wenigstens eine Dämpfereinrichtung mit einer ersten Dämpferkammer und einer zweiten Dämpferkammer, die über wenigstens ein steuerbares Drosselventil miteinander in Verbindung stehen. Dabei ist wenigstens eine wechselbare Elektronikeinheit vorgesehen, welche wenigstens eine Steuereinrichtung aufweist, um mit der Steuereinrichtung das steuerbare Drosselventil zu steuern, um die Dämpfereigenschaften zu beeinflussen. Dabei sind unterschiedliche Typen von Elektronikeinheiten anschließbar, sodass die austauschbare Elektronikeinheit den Einsatz einer anderen Elektronikeinheit mit einer einfacheren oder komplexeren Steuereinrichtung erlaubt, sodass durch einfachen Austausch der Elektronikeinheit der Stoßdämpfer in seiner Funktionalität und Steuerbarkeit erweitert oder beschränkt werden kann.

Der erfindungsgemäße Stoßdämpfer hat viele Vorteile. Ein erheblicher Vorteil des erfindungsgemäßen Stoßdämpfers ist, dass die austauschbare Elektronikeinheit den Einsatz einer anderen Elektronikeinheit mit einer einfacheren oder komplexeren Steuereinrichtung erlaubt. Dadurch kann durch einfachen Austausch der Elektronikeinheit der erfindungsgemäße Stoßdämpfer in seiner Funktionalität und Steuerbarkeit erweitert oder beschränkt werden.

Das Drosselventil ist insbesondere elektrisch und vorzugsweise elektronisch steuerbar. Möglich ist es auch, dass ein mechanisch einstellbares Drosselventil über eine elektrisch oder magnetisch verstellbare Einstelleinrichtung verstellbar ist.

Dabei kann die wechselbare Elektronikeinheit neben der Steuereinrichtung auch eine Bedieneinrichtung aufweisen, die zur Bedienung des Stoßdämpfers dient. Unterschiedliche Elektronikeinheiten können unterschiedliche oder auch keine Bedieneinheiten umfassen, die somit unterschiedliche Einstellungen an dem erfindungsgemäßen Stoßdämpfer ermöglichen.

Während eine Elektronikeinheit für einen Anfänger nur wenige oder sogar gar keine Einstellmöglichkeiten bietet, kann eine Elektronikeinheit für einen fortgeschrittenen Benutzer beispielsweise Einstellmöglichkeiten für die Stärke der Dämpfung und gegebenenfalls die Federstärke aufweisen, wozu beispielsweise eine zu-bzw. abschaltbare Feder oder Federkammer vorgesehen sein. Möglich ist es auch, dass über die Bedieneinheit ein Lock-out aktiviert wird, welches somit praktisch einen Einfeder- und/oder Ausfedervorgang unterbindet. Möglich ist es, dass verschiedene Elektronikeinheiten eine gleichartige oder sogar gleiche Steuereinrichtung aufweisen, während sie vom Funktionsumfang deutlich unterschiedlicher Bedieneinrichtungen aufweisen. Möglich ist es auch, dass sich verschiedene Elektronikeinheiten durch freischaltbare Eigenschaften unterscheiden, die nach Aktivierung eines Codes oder dergleichen freigeschaltet werden. Dazu können anhand von Seriennummern entsprechende Codes vorgesehen sein.

Möglich und bevorzugt ist es auch, dass an einer oder über eine Elektronikeinheit für fortgeschrittene Benutzer oder Experten Einstellmöglichkeiten für unterschiedliche Betriebsmodi und insbesondere unterschiedliche Gelände vorgesehen sind. Möglich sind auch Einstellmöglichkeiten für unterschiedliche Fahrtweisen, wie Trainingsfahren, Tourfahren, Rennenfahren etc.

An allen Ausgestaltungen ist es möglich und bevorzugt, dass eine Batterieeinheit austauschbar vorgesehen ist. Dabei kann die Batterieeinheit an der Elektronikeinheit aufgenommen sein und mit der Elektronikeinheit zusammen gewechselt werden. Es ist aber auch möglich, dass die Batterieeinheit separat an dem Stoßdämpfer austauschbar vorgesehen ist.

Möglich und bevorzugt ist eine Integration einer Batterieeinheit in die Elektronikeinheit, sodass verschiedene Elektronikeinheiten mit unterschiedlichen Energiekapazitäten zur Verfügung stehen. Bevorzugt ist es auch, dass an einer Elektronikeinheit oder dem Stoßdämpfer selbst Batterieeinheiten unterschiedlicher Kapazitäten anzuordnen sind.

Der Einsatz von Batterieeinheiten mit einer höheren Kapazität kann beispielsweise sinnvoll sein, wenn eine Ganztagestour ansteht oder wenn sogar mehrere Tage oder Wochen der Stoßdämpfer mit Energie versorgt werden soll und muss. Wird hingegen nur ein kurzes Rennen oder eine kurze Tour gefahren, kann auf eine Batterieeinheit mit geringerer Kapazität und somit geringerer Reichweite aber auch einem geringeren Gewicht zurückgegriffen werden.

Möglich und bevorzugt ist es auch, dass an der Batterieeinheit konventionelle und handelsübliche Batterien aufnehmbar sind. Dadurch kann praktisch jederzeit ein Austausch gewährleistet werden.

Möglich und bevorzugt ist auch der Einsatz von wiederaufladbaren Batterien, die über ein spezielles oder herkömmliches Ladegerät wieder geladen werden können.

Besonders bevorzugt weist der Stoßdämpfer eine Dämpfereinrichtung auf, bei der die erste Dämpferkammer und die zweite Dämpferkammer in einem gemeinsamen Gehäuse vorgesehen sind und wobei die erste Dämpferkammer und die zweite Dämpferkammer durch wenigstens einen Dämpferkolben variabel voneinander getrennt sind.

Vorzugsweise ist die Dämpfereinrichtung mit einem durch ein Feld beeinflussbaren rheologischen Fluid versehen. Vorzugsweise umfasst das elektrisch steuerbare Drosselventil wenigstens einen Dämpfungskanal, der durch eine Felderzeugungseinrichtung mit einem Feld beaufschlagbar ist. Insbesondere dient eine solche Felderzeugungseinrichtung zur Beeinflussung von magnetorheologischen Fluiden. Vorzugsweise wird zur Erzeugung des Feldes wenigstens zeitweise wenigstens eine elektrische Spule eingesetzt.

In allen Ausgestaltungen ist es bevorzugt, dass die Elektronikeinheit eine Bedieneinrichtung aufweist, welche insbesondere wenigstens zwei Bedienknöpfe und wenigstens eine Anzeige aufweist. In einfachen Fällen können mit "+" und "-" bezeichnete Bedienknöpfe für eine Erhöhung bzw. Verringerung der Dämpfung und eine optische Anzeige, wie beispielsweise eine Leuchtdiode zur Quittierung von Eingaben oder zur Anzeige von Betriebszuständen vorgesehen sein.

Möglich und bevorzugt ist es auch, dass die Anzeige zur grafischen Darstellung von Daten ausgebildet und/oder berührungsempfindlich ausgeführt ist und somit gleichzeitig zur Erfassung von Bedienvorgängen dient.

In allen Ausgestaltungen ist es bevorzugt, dass wenigstens zwei unterschiedliche Typen von Elektronikeinheiten anschließbar sind, wobei sich die Elektronikeinheiten in ihrer Komplexität und/oder in ihren Bedien- und Einstellmöglichkeiten und/oder in ihrer Betriebsdauer unterscheiden.

Es ist möglich, dass eine Elektronikeinheit als autarke Einheit vorgesehen ist, die insbesondere vollautomatisch die Steuerung des Stoßdämpfers vornimmt. Dazu kann die Elektronikeinheit beispielsweise auf Sensoren in dem Stoßdämpfer oder innerhalb der Elektronikeinheit zurückgreifen und somit eine sensorgesteuerte Einstellung des Stoßdämpfers vornehmen.

Möglich ist es auch, dass die Elektronikeinheit auf zuvor gespeicherte Daten zurückgreift und beispielsweise anhand von Positionsdaten oder dergleichen zuvor gespeicherte oder hinterlegte Einstellungen abruft. Eine solche autarke Elektronikeinheit kann ohne weitere Bedieneinheit auskommen und dennoch hochkomplexe Steuervorgänge durchführen. Für Anfänger kann das ideal sein.

Für Fortgeschrittene oder Experten können andere Elektronikeinheiten vorgesehen sein, wobei die unterschiedlichen Elektronikeinheiten mit wenigen Handgriffen insbesondere ohne Einsatz von Werkzeug austauschbar sein können. Durch den Austausch einer Elektronikeinheit kann somit der Benutzer die Flexibilität der Steuerung und gegebenenfalls auch die Funktionalität erhöhen.

Eine einfache Version für Anfänger kommt z.B. vollautomatisch ohne Benutzinteraktion aus und deren Steuerungsparameter können beispielsweise nur vom Händler oder Betreuern eines Teams geändert werden. Durch die integrierte intelligente Steuerungseinrichtung wird automatisch immer ein geeigneter Betriebsmodus eingestellt. Eine solche Version kann z.B. für Leihräder sinnvoll sein.

Eine für Gelegenheitsfahrer vorgesehene Version bietet manuelle Einstellmöglichkeiten an einer lokalen Bedieneinrichtung. Z.B. kann die Dämpfung erhöht oder verringert werden oder es kann auch ein Lock-out aktiviert werden, um die Dämpfung abzustellen.

Eine Version für Fortgeschrittene und/oder eine Version für Experten kann weitere Möglichkeiten bieten. In bevorzugten Ausgestaltungen ist die Elektronikeinheit zum Datenaustausch mit wenigstens einer weiteren Steuerungseinrichtung vorgesehen und ausgebildet.

Dazu kann die Elektronikeinheit mit einer Netzwerkschnittstelle ausgerüstet sein, welche zum drahtgebundenen und/oder drahtlosen Datenaustausch ausgebildet ist. Dazu kann die Elektronikeinheit wenigstens eine Funknetzschnittstelle und/oder eine Kabelverbindung aufweisen. Möglich ist es auch, dass mehrere Netzwerkschnittstellen vorgesehen sind. Beispielsweise kann ein Kabelanschluss vorgesehen sein und/oder es kann eine Drahtlosverbindung oder es können mehrere Drahtlosverbindungen aufgebaut werden.

Der Empfang und die Speicherung von Positionssignalen wie z.B. GPS-Daten kann möglich sein. Möglich ist es auch, dass Daten über eine Mobilfunkschnittstelle oder von Satelliten ausgetauscht werden. Über solche unidirektionalen oder bidirektionalen Datenverbindungen kann auch beispielsweise ein Datenaustausch mit dem Internet ermöglicht werden. Dadurch ist es möglich, auf im Internet verfügbare Datenbanken zurückzugreifen, sodass der Benutzer gegebenenfalls jederzeit den Vergleich mit anderen Benutzern oder beispielsweise zuvor zurückgelegten Runden hat.

Eine weitere Steuerungseinrichtung ist insbesondere als zentrale Steuerungseinrichtung ausgebildet, die zentral beispielsweise an dem Lenker des Fahrrades angeordnet werden. Eine solche Steuerungseinrichtung kann mit einer entsprechenden Anzeigeeinrichtung versehen werden, um beispielsweise auch Daten über die Fahrgeschwindigkeit, die Uhrzeit, Streckendaten wie die Durchschnittsgeschwindigkeit etc. auszugeben.

Eine solche zentrale Steuerungseinrichtung kann zur Steuerung mehrerer Fahrradkomponenten und insbesondere Stoßdämpfer an dem Fahrzeug eingesetzt werden. Beispielsweise können die Federgabel und der Hinterradstoßdämpfer eines Fahrrades gleichzeitig gesteuert werden. Beginnt der Fahrer beispielsweise mit einer steilen Bergauffahrt kann eine automatische Absenkung der Federgabel erfolgen und es können entsprechend angepasste Einstellungen für den Hinterraddämpfer erfolgen, um die Bergauffahrt möglichst komfortabel zu gestalten.

Die Verbindung der zentralen Steuerungseinrichtung mit den Elektronikeinheiten der einzelnen Stoßdämpfer kann gemäß einem der Standards für die drahtlose Übertragung von Signalen erfolgen, wobei die Übertragung mit eindeutigen Identifikationsnummern und/oder verschlüsselt erfolgen kann. Beispielsweise kann die Übertragung der Signale gemäß dem ANT+ Standard erfolgen. Möglich ist aber auch eine Verbindung der einzelnen Komponenten über WLAN oder BLUETOOTH oder andere bekannte Standards.

In allen Ausgestaltungen ist es bevorzugt, dass wenigstens ein Sensor vorgesehen ist, welcher eine Gruppe von Sensoren entnommen ist welcher Lage- und Positionssensoren wie GPS-Sensoren, Geschwindigkeits- und Beschleunigungssensoren, Drehmoments- und Gewichtssensoren, Drucksensoren, sowie dämpferinterne Positionssensoren umfasst. Möglich ist auch der Einsatz mehrerer verschiedener oder gleichartiger Sensoren.

In einer weiteren Ausgestaltung eines Stoßdämpfers für ein wenigstens teilweise muskelbetriebenes Fahrzeug und insbesondere ein Fahrrad umfasst der Stoßdämpfer wenigstens eine Dämpfereinrichtung, die eine erste und eine zweite Dämpferkammer umfasst. Die erste Dämpferkammer steht mit der zweiten Dämpferkammer über wenigstens ein steuerbares Drosselventil in Verbindung, wobei wenigstens eine Steuereinrichtung zur Steuerung des Drosselventils vorgesehen ist. Wenigstens eine wechselbare Kommunikationseinrichtung und/oder Bedieneinheit ist vorgesehen, um mittels der Kommunikationseinrichtung die Steuereinrichtung zu bedienen.

Weitere Vorteile und Eigenschaften der vorliegenden Erfindung ergeben sich aus dem Ausführungsbeispiel, das mit Bezug auf die beiliegenden Figuren im Folgenden beschrieben wird.

In den Figuren zeigen:
- Fig. 1: eine schematische Ansicht eines mit einem erfindungsgemäßen Stoßdämpfer ausgerüsteten Fahrrads;
- Fig. 2: eine schematische Ansicht der Kommunikationsverbindungen des Fahrrads nach Fig. 1;
- Fig. 3: eine stark schematische geschnittene Ansicht eines Stoßdämpfers des Fahrrads nach Fig. 1 mit einer Elektronikeinheit;
- Fig. 4: eine stark schematische Querschnittsansicht der Drosseleinrichtung des Stoßdämpfers nach Fig. 3;
- Fig. 5: eine weitere stark schematische Querschnittsansicht einer anderen Drosseleinrichtung;
- Fig. 6: einen möglichen Verlauf der Feldstärke über der Zeit;
- Fig. 7: die Kennlinie eines Ventils mit einem Übergangsabschnitt;
- Fig. 8: eine weitere Elektronikeinheit für den Stoßdämpfer nach Fig. 3; und
- Fig. 9: noch eine andere Elektronikeinheit für den Stoßdämpfer nach Fig. 3.

Mit Bezug auf die beiliegenden Figuren wird im Folgenden ein Ausführungsbeispiel eines mit Stoßdämpfern 100 ausgerüsteten Fahrrads 200 erläutert.

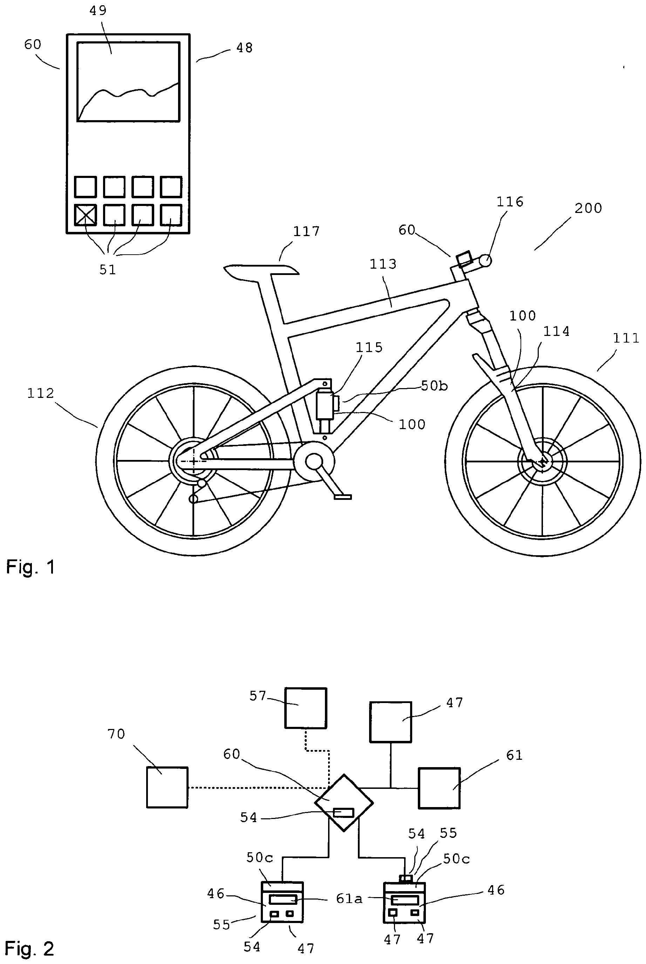

Fig. 1 zeigt eine schematische Darstellung eines Fahrrades 200, welches als Mountainbike ausgeführt ist und einen Rahmen 113 sowie ein Vorderrad 111 und ein Hinterrad 112 aufweist. Sowohl das Vorderrad 111 als auch das Hinterrad 112 sind mit Speichen ausgerüstet und können über Scheibenbremsen verfügen. Eine Gangschaltung dient zur Wahl des Übersetzungsverhältnisses. Weiterhin weist das Fahrrad 200 einen Lenker 116 und einen Sattel 117 auf.

Das Vorderrad 111 verfügt über einen als Federgabel 114 ausgeführten Stoßdämpfer 100 und an dem Hinterrad ist ein als Hinterraddämpfer 115 ausgeführter Stoßdämpfer 100 vorgesehen. Eine zentrale Steuereinrichtung 60 ist hier an dem Lenker 116 vorgesehen.

Die zentrale Steuereinrichtung 60 kann auch als Fahrwerksteuerung eingesetzt werden und sowohl die Federgabel 114 als auch den Hinterradstoßdämpfer 115 synchron steuern. Die Steuerung der Stoßdämpfer 100 und weiterer Fahrradkomponenten kann in Abhängigkeit verschiedenster Parameter und auch anhand von sensorischen Daten erfolgen. Gegebenenfalls können auch die Feder- und/oder Dämpfungseigenschaften der Sattelstütze eingestellt werden.

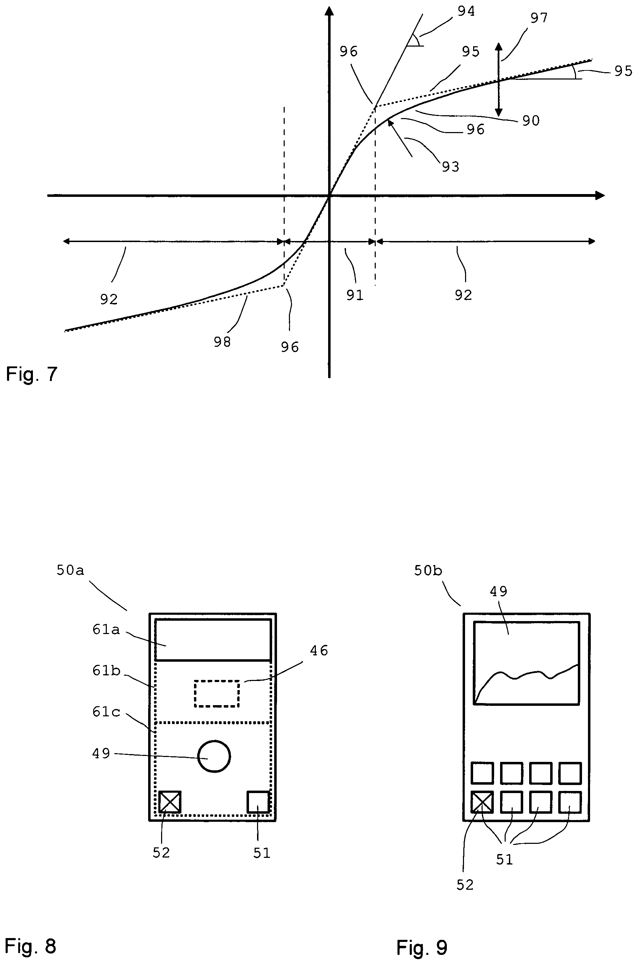

Zusätzlich weist jeder Stoßdämpfer 100 wenigstens eine Steuereinrichtung 46 an einer austauschbar vorgesehenen Elektronikeinheit 50c auf. Anstelle der Elektronikeinheit 50c könnte auch eine Elektronikeinheit 50a oder eine Elektronikeinheit 50b vorgesehen sein (vgl. die Figuren 8 und 9). Die verschiedenen Elektronikeinheiten 50a bis 50c können wenigstens eine Batterieeinheit 61a bis 61c umfassen. Die Batterieeinheiten 61a bis 61c können zusammen mit der jeweiligen Elektronikeinheit oder separat gewechselt werden. Beispielsweise können wiederaufladbare Batterieeinheiten vorgesehen sein, die zusammen mit der Elektronikeinheit 50a bis 50c dem Stoßdämpfer mit einem Handgriff entnommen werden können, um die Elektronikeinheit wieder aufzuladen. Möglich und bevorzugt ist es auch, dass handelsübliche Batterien eingesetzt werden. Vorzugsweise können auch Brennstoffzellen oder dergleichen eingesetzt werden. Bei Fahrrädern mit Elektrounterstützung kann die Energieversorgung auch durch die zentrale Batterieeinheit erfolgen. Möglich ist auch die Unterstützung oder der Betrieb durch einen Dynamo oder dergleichen.

Die Elektronikeinheit 50c ist für fortgeschrittene Benutzer vorgesehen und steht im Datenaustausch mit der zentralen Steuereinrichtung 60. In den Fig. 8 und 9 sind die Elektronikeinheiten 50a und 50b schematisch dargestellt.

Die Elektronikeinheit 50c kann hier jederzeit durch eine andere Elektronikeinheit 50a ersetzt werden (vgl. Fig. 8), die autark mit der integrierten Steuereinrichtung 46 arbeitet. Dann ist keine zentrale Steuereinrichtung 60 vorgesehen bzw. dient diese als reiner Fahrradcomputer.

Möglich ist es auch, dass die Steuereinrichtung 46 oder eine Steuereinheit in dem Stoßdämpfer integriert ist, wobei die Steuereinheit die grundlegenden Funktionen zur Verfügung stellt. Die Bedienung erfolgt dann über die Elektronikeinheit 50a, 50b oder 50c der über die zentrale Steuereinrichtung 60.

Über die Steuereinrichtung 60 oder über die lokal vorgesehenen Steuereinrichtungen 46 kann eine weitgehende Steuerung der Fahreigenschaften des Fahrrades 200 folgen. Dabei ist ein Einsatz an rein muskelbetriebenen Fahrrädern, aber auch der Einsatz an Zwei- und/oder Mehrrädern und insbesondere an Fahrrädern mit Elektrounterstützung möglich und bevorzugt. Mit der Steuereinrichtung 60 und/oder den Steuereinrichtungen 46 können in Abhängigkeit von dem aktuell eingestellten Fahrprofil und von den sonstigen Daten, die den Steuereinrichtungen zur Verfügung gestellt werden, die Dämpfungseigenschaften der Federgabel 114 und des Hinterradstoßdämpfers 115 eingestellt werden.

Die zentrale Steuereinrichtung 60 wird über eine Bedieneinrichtung 48 bedient. Es ist möglich, dass die Steuereinrichtung 60 eine Anzeigeeinrichtung 49 und/oder mehrere Bedienknöpfe 51 und 52 aufweist. Möglich ist es auch, dass die Steuereinrichtung berührungsempfindlich oder näherungssensitiv ausgeführt ist, sodass eine Bedienung durch Berührung entsprechender Schaltflächen oder dergleichen möglich ist.

Die Steuereinrichtung 60 kann dann auch als Fahrradcomputer dienen und Informationen über die aktuelle Geschwindigkeit, sowie über die Durchschnittsgeschwindigkeit und/oder die Tages-, Tour-, Runden- und Gesamtkilometer anzeigen. Möglich ist auch die Anzeige der aktuellen Position, der momentanen Höhe oder der gefahrenen Strecke sowie des Streckenprofils.

Fig. 2 zeigt eine schematische Darstellung der Kommunikationsverbindungen der beteiligten Komponenten. Die zentrale Steuereinrichtung 60 kann drahtgebunden oder drahtlos mit den einzelnen Komponenten verbunden sein. Die gepunktet dargestellte Verbindung mit dem Internet 70 ist eine drahtlose Verbindung. Die Steuereinrichtung 60 kann mit der Batterieeinheit 61a verbunden sein oder eine eigene Energieversorgung aufweisen. Weiterhin kann die Steuereinrichtung 60 mit einem Sensor 47 oder mehreren Sensoren 47 verbunden sein. Die grafische Bedieneinheit 57 bzw. Anzeigeeinheit kann auch drahtlos mit der Steuereinheit 60 verbunden sein. Drahtlos oder drahtgebunden kann der Stoßdämpfer 100 der Federgabel 114 oder der Stoßdämpfer 100 des Hinterraddämpfers 115 angeschlossen sein. Die Verbindung erfolgt über eine Netzwerkschnittstelle 54, die als Funknetzschnittstellen 55 oder als Kabelanschluss 56 ausgeführt sein können.

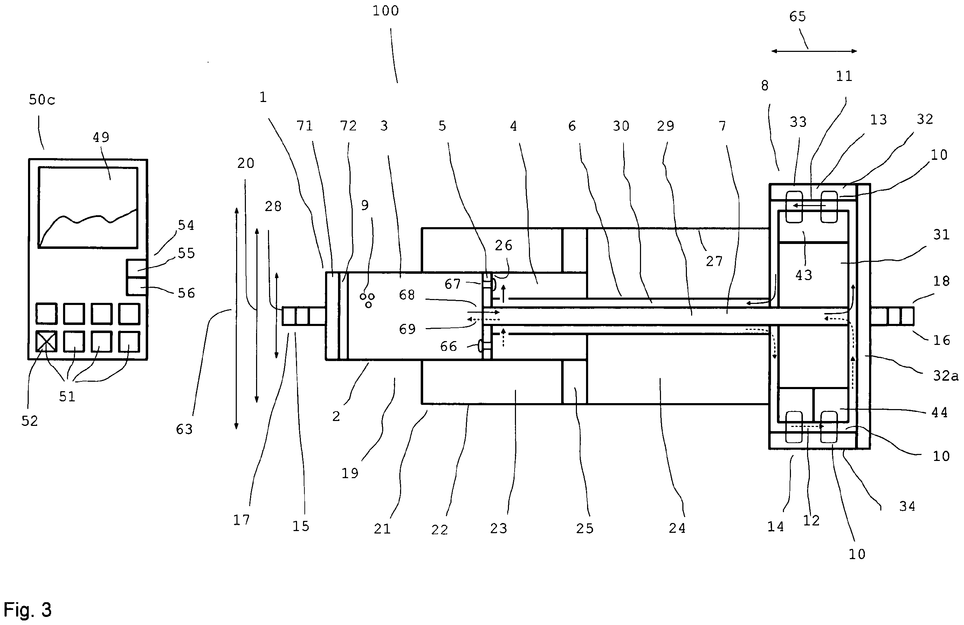

Fig. 3 zeigt in einer stark schematischen Ansicht einen Stoßdämpfer 100, der hier beispielsweise in dem Hinterraddämpfer 115 Anwendung findet.

Der Stoßdämpfer 100 weist ein erstes Ende 15 und ein zweites Ende 16 auf. Der Stoßdämpfer 100 verfügt über eine Dämpfereinrichtung 1 in einem Dämpfergehäuse 2 und über eine Federeinrichtung 21 in einem Federgehäuse 22. Die Dämpfereinrichtung 1 ist näher an dem ersten Ende 15 angeordnet und die Federeinrichtung 21 ist näher an dem zweiten Ende 16 angeordnet. An dem ersten Ende ist ein erster Krafteinleitungsabschnitt bzw. Anschluss 17 und an dem zweiten Ende 16 ist ein zweiter Krafteinleitungsabschnitt bzw. Anschluss 18 vorgesehen.

Innerhalb des Dämpfergehäuses 2 sind die erste Dämpferkammer 3 und die zweite Dämpferkammer 4 angeordnet, die durch einen Dämpferkolben 5 voneinander getrennt sind.

Die erste und die zweite Federkammer 23, 24 sind durch einen Federungskolben 25 getrennt, der mit dem Dämpfergehäuse 2 verbunden ist. Die erste Federkammer 23 ist radial außerhalb des Dämpfergehäuses 2 vorgesehen. Das Dämpfergehäuse 2 taucht bei der Federbewegung in die Federeinrichtung 21 ein.

Die Außenseite 19 des Dämpfergehäuses 2 dient als Lauffläche für das Federgehäuse 22 und begrenzt die erste Federkammer 23 radial nach innen. Zwischen der ersten Federkammer 23 und dem Dämpfergehäuse 2 ist eine Dichtung vorgesehen, die sich auf der Außenseite 19 des Dämpfergehäuses 2 abstützt. Der Federungskolben 25 gleitet auf der Innenseite 27 des Federgehäuses 22.

Beim Einfedern des Stoßdämpfers 100 vergrößern sich das Volumen der zweiten Dämpferkammer 4 und auch das Volumen der ersten Federkammer 23. Beim Ausfedern vergrößern sich das Volumen der ersten Dämpferkammer 3 und auch das Volumen der zweiten Federkammer 24.

Der Dämpferkolben 5 wird von einer Kolbenstange 6 gehalten, die sich von dem Dämpferkolben 5 aus durch die zweite Dämpferkammer 4 aus dem Dämpfergehäuse 2 hinaus und durch die angrenzende zweite Federkammer 24 der Federeinrichtung 21 hindurch erstreckt. Der Dämpferkolben 5 weist eine Dichtung 26 gegenüber dem Dämpfergehäuse 2 auf, die über im Kolben integrierte Magnete eine Dichtung durch das magnetorheologische Fluid bewirken.

Die Kolbenstange 6 ist hier im Ausführungsbeispiel doppelwandig ausgeführt und weist einen radial inneren Durchflusskanal 29 und einen radial äußeren Durchflusskanal 30 auf, die beide Teil eines Strömungskanals 7 sind. Der Strömungskanal 7 verbindet die erste Dämpferkammer 3 mit der zweiten Dämpferkammer 4, wobei das von der ersten Dämpferkammer 3 in die zweite Dämpferkammer 4 übertretende Fluid zunächst durch die Kolbenstange 6 aus dem Dämpfergehäuse 2 nach außen zu der Drosseleinrichtung 8 geleitet wird, von der es durch den äußeren Strömungskanal 29 der Kolbenstange 6 zu der zweiten Dämpferkammer 4 geleitet wird. Zur Verringerung des Strömungswiderstandes kann der Durchmesser der Kolbenstange gegenüber herkömmlichen Stoßdämpfern vergrößert werden, um einen größeren maximalen Strömungsquerschnitt zur Verfügung zu stellen. Dabei wird das Fluid 9 innerhalb der Kolbenstange 6 durch die zweite Federkammer 24 hindurch zu der Drosseleinrichtung 8 und wieder zurück geleitet. An der Drosseleinrichtung 8 ist ein Drosselventil 45 ausgebildet. Das Drosselventil 45 ist elektrisch einstellbar und weist wenigstens zwei Felderzeugungseinrichtungen 13 und 14 auf, die hier als Magnetfelderzeugungseinrichtungen ausgeführt sind.

Die durchgezogen eingezeichneten Pfeile 68 zeigen die Strömungsrichtung des Fluids 9 in der Druckstufe und die gestrichelten Pfeile 69 die Strömungsrichtung des Fluids 9 in der Zugstufe.

Jede Felderzeugungseinrichtung 13 oder 14 kann eine, zwei oder mehr Felderzeugungseinheiten 33, 34 umfassen, die beispielsweise als Spulen 38, 39 mit entsprechenden Kernen 40 und 41 ausgeführt sind, um bei Anlage eines elektrischen Stroms ein entsprechendes Magnetfeld 10 auszubilden. Jede Felderzeugungseinheit 33, 34 ist als Magneteinrichtung 31 ausgebildet, um in dem Dämpfungskanal ein Magnetfeld zu erzeugen.

In der Drosseleinrichtung 8 ist wenigstens ein Dämpfungskanal 11, 12 vorgesehen, um das durchtretende magnetorheologische Fluid 9 gezielt beeinflussen zu können. Die Dämpfungskanäle 11, 12 können parallel zur Längsachse des Stoßdämpfers 100 ausgerichtet sein und sich über einen wesentlichen Teil oder sogar vollständig über einen Umfang der Drosseleinrichtung 8 erstrecken.

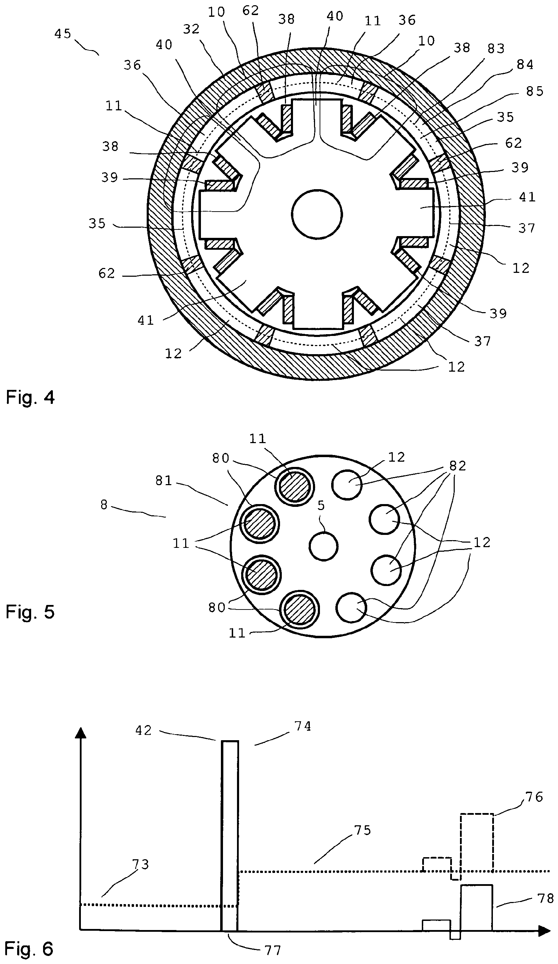

Fig. 4 zeigt einen Querschnitt durch die Drosseleinrichtung des Stoßdämpfers 100 nach Fig. 3.

Vorzugsweise ist ein radial äußerer magnetischer Ringleiter 32 vorgesehen, der radial nach außen den Dämpfungskanal 11 oder die Dämpfungskanäle 11 und 12 begrenzt. Radial nach innen schließen sich die Felderzeugungseinheiten 33 und 34 etc. an. Bei den Felderzeugungseinheiten 33 und 34 ist ein zentraler etwa zahnradförmiger oder sternförmiger Körper mit radialen Vorsprüngen, Zähnen oder Kernen 40, 41 vorgesehen, die jeweils mit einer Spule 38 oder 39 umwickelt sind.

Möglich ist es auch, dass die Felderzeugungseinheiten 33 und 34 etc. radial außen vorgesehen sind, während ein magnetischer Ringleiter oder mehrere Ringleitersegmente radial weiter innen vorgesehen sind.

Jede einzelne der hier insgesamt acht unterschiedlichen Spulen 38, 39 kann separat ansteuerbar sein, um so entsprechende Dämpfungskanäle 11, 12 etc. bzw. Anteile des gesamten Dämpfungskanals mit unterschiedlichen Feldstärken beaufschlagen zu können.

In gewissen Umfangsabständen sind Trennelemente 62 vorgesehen, die als magnetische Isolatoren wirken und weiterhin für eine definierte und zentrierte Halterung der Felderzeugungseinheiten 33, 34 in dem Ringleiter 32 sorgen.

Dadurch sich die Dämpfungskanäle 11, 12 ringförmig um die Kolbenstange 6 herum erstrecken und dadurch, dass der radiale Abstand der Dämpfungskanäle 11, 12 bzw. der Durchmesser 63 größer ist als der Innendurchmesser 28 der zweiten Dämpfungskammer, kann die axiale Länge 65 der Dämpfungskanäle erheblich reduziert werden. Hier ist der radiale Abstand der Dämpfungskanäle 11, 12 bzw. der Durchmesser 63 auch größer als der Durchmesser 20 der Federeinrichtung 21 (vgl. Fig. 3). Die maximal in den Dämpfungskanälen 11, 12 auftretenden Strömungsgeschwindigkeiten sind aufgrund der insgesamt größeren Querschnittsfläche der Dämpfungskanäle 11, 12 gering. Würden die Dämpfungskanäle hingegen beispielsweise in dem Dämpferkolben 5 vorgesehen, so wären bei gleicher Höhe und Länge des Dämpfungskanals durch den erheblich reduzierten Durchmesser 28 des Dämpferkolbens bedingt die Strömungsgeschwindigkeiten in den Dämpfungskanälen größer. Dann müsste der Dämpferkolben 5 eine entsprechend größere axiale Länge aufweisen, was zu einem erhöhten Bauraum führen würde bzw. den Hub reduzieren würde.

Durch gezielte Steuerung einzelner Spulen 38, 39 mittels der Steuerungseinrichtung 46 können die Dämpfungskanäle 11, 12 unterschiedlich starken Feldern ausgesetzt werden, wodurch über der gesamten Querschnittsfläche unterschiedliche Dämpfungsabschnitte entstehen. Beispielsweise kann ein Durchlassabschnitt 37 an einem Dämpfungskanal entstehen, wenn die benachbarten Spulen 39 stromlos geschaltet werden, sodass dort kein Magnetfeld oder nur ein geringes Magnetfeld wirkt. In diesem Fall wirkt der Durchlassabschnitt 37 als Bypass. Werden auf beiden Seiten des Dämpfungskanals die Spulen 38 mit maximaler Stromstärke beaufschlagt, so bildet sich ein Sperrabschnitt 36 aus, der praktisch kein magnetorheologisches Fluid 9 durchlässt.

Der gesamte Dämpfungskanal 11, 12 kann so im dargestellten Beispiel in 8 Abschnitte eingeteilt werden, die entsprechend dem Strom in den zugehörigen Felderzeugungseinheiten 33, 34 unterschiedliche Eigenschaften haben. Ein Übergangsabschnitt 35 kann gebildet werden, wenn in einem oder mehreren Abschnitten zwischen Sperrabschnitt 36 und Durchlassabschnitt 37 ein Magnetfeld 10 mit einer Feldstärke anliegt, welches zwischen jenem des Sperrabschnitts 36 und dem Feld des Durchlassabschnitts 37 liegt.

Durch geschicktes Anordnen und Magnetisieren der Kerne 40, 41 und durch magnetische Streufelder können auch inhomogene Bereiche innerhalb eines Segments des Dämpfungskanals 11, 12 erzielt werden.

Zusätzlich zu dem Drosselventil 45 können weitere Ventile 66 und 67 beispielsweise im Dämpferkolben 5 vorgesehen sein, wie in Fig. 3 dargestellt. Solche Ventile 66 und 67 werden vorzugsweise als Einwegventile ausgebildet und können mit einer Feder in ihre Schließstellung vorbelastet ausgeführt sein. Bevorzugt ist der Einsatz von Shims, die kraftabhängig einen entsprechenden Durchfluss ermöglichen. Die Ventile können z.B. auch als Blow-Off-Ventile Schutz vor Überlast bieten.

Durch den Einsatz solcher Ventile 66, 67 oder eines der beiden Ventile 66, 67 kann beispielsweise ermöglicht werden, dass nur in der Druckstufe beim Einfedern das elektronische Drosselventil 45 aktiv ist, während beispielsweise für die Zugstufe das Ventil 66 fest eingestellt ist und den direkten Übertritt durch den Dämpferkolben 5 ermöglicht. Umgekehrt ist es auch möglich, dass das mechanische Ventil 67 in der Druckstufe arbeitet, während der Durchfluss in der Zugstufe durch die Drosseleinrichtung 8 erfolgt.

Die Steuerungseinrichtung 46 ist in der austauschbar vorgesehenen Elektronikeinheit 50c vorgesehen. Für Anfänger kann auch eine Elektronikeinheit 50a angebracht werden, die nur wenige oder sogar gar keine Einstellmöglichkeiten bietet, um den Benutzer nicht zu überfordern.

Wenn ein Benutzer entsprechende Erfahrungen gesammelt hat, kann er die Elektronikeinheit 50a gegen eine Elektronikeinheit 50b oder 50c austauschen oder entsprechend aufrüsten lassen, sodass dem Benutzer mehr Einstellmöglichkeiten und Funktionen zur Verfügung stehen.

So kann beispielsweise eine Datenspeicherung vorhanden sein, die Tourendaten aufnimmt und speichert. Gegebenenfalls können auch zuvor in der Steuereinrichtung oder auf einem Computer oder im Internet gespeicherte Daten geladen werden, um für eine geplante Tour optimale Einstellungen zu erhalten.

Der Stoßdämpfer 100 kann über Dauermagnete 43, 44 verfügen, deren jeweilige Magnetfeldstärke im Betrieb durch entsprechende magnetische Impulse der Spulen 38, 39 dauerhaft veränderbar ist.

Fig. 5 zeigt einen stark schematischen Querschnitt durch eine andere Drosseleinrichtung 8 bzw. ein Drosselventil 45 für einen Stoßdämpfer nach Fig. 3, wobei insgesamt 8 Dämpfungskanäle 11, 12 vorgesehen sind. Hier sind zwei Gruppen bzw. Kanalgruppen 81 und 82 vorgesehen, wobei hier jeweils vier Dämpfungskanäle 11 die Kanalgruppe 81 und jeweils vier Dämpfungskanäle 12 die Kanalgruppe 82 bilden. Bei der Kanalgruppe 81 sind in einer Strömungsrichtung hier als Shim-Ventile 80 ausgebildete Einwegventile vorgesehen, die z.B. Fluid nur in der Druckstufe durchlassen. Das bedeutet dann, dass alle insgesamt acht Dämpfungskanäle 11 und 12 der Kanalgruppen 81 und 82 in der Druckstufe aktiv sind, während in der Zugstufe die vier Dämpfungskanäle der Kanalgruppe 81 durch die jeweiligen Shim-Ventile 80 blockiert sind. Dadurch ergeben sich schon mechanisch unterschiedliche Dämpferkennlinien für die Druckstufe und die Zugstufe, sodass weniger elektrische Energie zur Erzielung der gewünschten Kennlinie eingesetzt werden muss. Auch eine umgekehrte Realisierung ist möglich, bei der in der Druckstufe die vier Dämpfungskanäle der Kanalgruppe 81 durch die jeweiligen Shim-Ventile 80 blockiert sind, während in der Zugstufe alle Dämpfungskanäle aktiv sind. Solche Shim-Ventile erlauben eine einfache mechanische Begrenzung des maximalen Strömungsquerschnittes in einer Fließrichtung.

Solche Zusatzventile können sich im Bereich des Dämpfungskanals oder an einer anderen Stelle des Dämpfers wie beispielsweise dem Strömungskanal oder dem Dämpfungskolben befinden. Abhängig von der Anwendung können verschiedenste Zusatzventile wie beispielsweise von der Strömungsrichtung und/oder dem Druck abhängige Shim-Ventile, von der Temperatur oder sonstigen Parametern abhängige Ventile oder auch steuerbare elektromechanische Ventile eingesetzt werden. Diese Zusatzventile können den Durchfluss durch zumindest einen Teil mindestens eines Dämpfungskanals blockieren, freigeben bzw. den Strömungswiderstand erhöhen oder einen Bypass zum Dämpfungskanal bilden.

Weiterhin kann quer zum Magnetfeld wenigstens eine Zwischenwand bzw. Trennwand 83 vorgesehen sein, die wenigstens einen Dämpfungskanal in Richtung der Feldlinien in zwei Teilkanäle 84, 85 segmentiert. Die Zwischenwand 83 besteht dabei aus einem magnetischen Leiter. So kann die für eine bestimmte Verkettung der magnetorheologischen Partikel benötigte Feldstärke gesenkt werden, sodass der Energiebedarf der Spule sehr gering sein kann.

Fig. 6 zeigt die Funktionsweise bei der Veränderung oder Einstellung einer gewünschten Magnetfeldstärke von einer ersten Magnetfeldstärke 73 auf eine zweite Magnetfeldstärke 75. Dargestellt ist die Stärke des Magnetfeldes über der Zeit. Die Feldstärke des Dauermagneten 43, 44 ist gepunktet dargestellt, während das von der elektrischen Spule 38 während des Impulses 42 erzeugte magnetische Feld 74 durchgezogen eingezeichnet ist.

Klar erkennbar ist, dass die von der elektrischen Spule 38 erzeugte Magnetfeldstärke 74 über den größten Teil der Zeit Null ist, da ein von der elektrischen Spule 38 erzeugtes Magnetfeld nicht für den normalen Betrieb nötig ist und somit dort keine elektrische Energie benötigt wird.

Ein von der elektrischen Spule 38 erzeugtes Magnetfeld 74 wird nur benötigt, wenn eine Veränderung der Magnetfeldstärke 73, 75 des Dauermagneten 43 angestrebt wird.

So liegt die von dem Dauermagneten 43 erzeugte magnetische Feldstärke 73 zunächst bei einem geringeren Wert, bis ein magnetischer Impuls 42 durch die elektrische Spule 38 ausgelöst wird. Die von der elektrischen Spule 38 erzeugte Magnetfeldstärke 74 weist eine derartige Stärke auf, dass der Dauermagnet 43, 44 dauerhaft mit einer entsprechenden Stärke magnetisiert wird.

Beispielsweise kann die magnetische Feldstärke des Dauermagneten 43, 44 von einer zunächst geringeren Feldstärke 73 auf eine entsprechend höhere Feldstärke 75 erhöht werden, um eine stärkere Dämpfung zu bewirken bzw. um das Dämpfungsventil 45 zu schließen.

Während die Impulsdauer 77 für den magnetischen Impuls 42 nur sehr kurz ist und im Bereich von einigen Millisekunden liegen kann, weist der Dauermagnet 43, 44 anschließend dauerhaft die hohe magnetische Feldstärke 75 auf, die bei einer entsprechenden Magnetfeldstärke 74 des magnetischen Impulses 42 auch bis in die Sättigung des verwendeten hartmagnetischen Materials reichen kann. Die von der Spule 38 während des magnetischen Impulses 42 erzeugte Magnetfeldstärke 74 bewirkt eine dauerhafte Änderung der magnetischen Feldstärke des Magneten 43 von zunächst einer magnetische Feldstärke 73 zu einer magnetischen Feldstärke 75.

Aus Fig. 6 ist ersichtlich, dass die Energieeinsparung gegenüber einem herkömmlichen System, das dauernd Strom benötigt, von der Häufigkeit der Ummagnetisierungen abhängt. Doch auch bei häufigem Ummagnetisieren, beispielsweise im Sekundentakt, kann der Energiebedarf kleiner als bei einem vergleichbaren System ohne Remanenz sein. Wird die Ummagnetisierung nur bei Bedarf betätigt, also beispielsweise bei einem Wechsel der Fahrbahnbeschaffenheit, tritt der Vorteil gegenüber anderen Systemen noch erheblich deutlicher zu Tage.

Bei einer entsprechend geringeren Magnetisierung des Dauermagneten 43, 44 wird ein entsprechend geringes magnetisches Feld erzeugt. Eine Entmagnetisierung kann durch ein schwächer werdendes magnetisches Wechselfeld erzeugt werden.

Weiterhin zeigt Fig. 6 im rechten Teil des Diagramms schematisch noch eine Situation, bei der die Spule 38 auch zur zeitlichen Modifikation des wirksamen Magnetfeldes verwendet wird. Wird die Spule 38 nur mit einem geringen und z.B. zeitlich variablen Strom 78 beaufschlagt, welches in Fig. 8 im rechten Teil durchgezogen eingezeichnet ist, so wird das insgesamt wirksame Magnetfeld 76 dementsprechend beeinflusst und je nach Polarisation verstärkt oder geschwächt. Damit ist auch eine dynamische Beeinflussung des wirkenden magnetischen Feldes 76 möglich, ohne die dauerhafte Magnetisierung des Dauermagneten 43 (Feldstärke 75) zu ändern.

Analog können die anderen Spulen 38, 39 zur Beeinflussung der anderen Kerne 40, 41 eingesetzt werden. Die Beeinflussung kann synchron erfolgen. Es kann zur Erzeugung unterschiedlicher Abschnitte, wie beispielsweise eines Übergangs- oder Bypassabschnittes auch eine unterschiedliche Steuerung einzelner Spulen 38, 39 erfolgen.

Fig. 7 zeigt eine Dämpferkennlinie 90 des Stoßdämpfers 1 in einem Kraft-Geschwindigkeitsdiagramm des Dämpferkolbens. Der Low-Speed-Bereich 91 und der High-Speed-Bereich 92 sind über eine sanfte Abrundung mit einem Radius 93 verbunden. Die Kennlinie ist hier symmetrisch aufgebaut und zeigt den gleichen Verlauf für die Zug- und Druckstufe. Ein unterschiedlicher Verlauf der beiden Stufen ist aber grundsätzlich möglich und erwünscht.

Bei dem Stoßdämpfer 100 wird die Steigung 94 der Dämpferkennlinie im Low-Speed-Bereich 91 im Wesentlichen durch den Bypass-Abschnitt 37 bestimmt. Im High-Speed-Bereich 92 wird die Steigung 95 wesentlich durch den Gesamtquerschnitt der Dämpfungskanäle 11, 12 und durch die Stärke des Feldes im Sperrabschnitt 36 bestimmt.

Ein Übergangsabschnitt 35 mit einem über seiner Ausdehnung schwächer werdenden Magnetfeld führt zu einer vorteilhaften und nicht-linearen Ausprägung und zu der Abrundung, die zu einer angenehmen und sicheren Betriebsweise führt.

Eingezeichnet ist weiterhin ein Pfeil 97, der die Auswirkung eines unterschiedlich starken Magnetfeldes anzeigt. Mit einem stärkeren Magnetfeld verschiebt sich die Kennlinie nach oben, während sie sich bei einem schwächeren Magnetfeld nach unten verschiebt.

Punktiert eingezeichnet ist eine Dämpferkennlinie 98, die sich ergibt, wenn zwar ein Durchlassabschnitt 37 aber kein Übergangsabschnitt 35 vorliegt.

Die Steigung im Low-Speed-Bereich 94 ist durch den Anteil des Bypass- oder Durchlassabschnitts 37 einstellbar. Je größer der Durchlassabschnitt 37, desto kleiner die Steigung. Auch der Nulldurchgang wird durch den Durchlassabschnitt 37 erzeugt, da jederzeit Dämpfungsfluid durch den Durchlassabschnitt 37 unbeeinflusst fließen kann, sodass schon bei kleinen Kräften eine entsprechende Dämpferkolbenbewegung ausgelöst wird.

Die Steigung im High-Speed-Bereich 95 wird durch die Form des gesamten Strömungskanals und der Dämpfungskanäle 11 und 12 und die eingestellte Stärke des magnetischen Feldes 75 im Wirkabschnitt bzw. Sperrabschnitt 36 beeinflusst.

Der für den Komfort und die Sicherheit wichtige Bereich mit der Abrundung wird durch den Übergangsabschnitt 35 des Dämpfungskanals 11 bzw. 12 abgerundet, sodass eine ergonomische und sichere Betriebsweise ermöglicht wird. Die Größe des abgerundeten Bereichs ergibt sich aus der Größe und Gestalt des Übergangsabschnitts 35, der durch eine entsprechende Einstellung der Stärke der Magnetfelder der Felderzeugungseinrichtungen 13, 14 flexibel einstellbar ist.

Die Stromversorgung kann auch durch einen Generator, Dynamo oder insbesondere auch einen Nabendynamo unterstützt werden.

In den Figuren 8 und 9 sind zwei weitere Elektronikeinheiten 50a und 50b schematisch dargestellt. Die einfach aufgebaute Elektronikeinheit 50a aus Fig. 8 ist für Anfänger mit Grundkenntnissen vorgesehen und weist 2 Bedienknöpfe 51 und 52 und eine Anzeige 49 in Form einer Leuchtdiode auf. Einer der Bedienknöpfe 51, 52 kann zur Erhöhung der Dämpfung und der andere zur Verringerung der Dämpfung vorgesehen sein.

Beispielhaft sind in Fig. 8 drei unterschiedliche Batterieeinheiten 61a, 61b und 61c eingezeichnet, die wahlweise an der Elektronikeinheit 50a bis 50c angebracht werden können. Eine kleinere und leichtere Variante 61a eignet sich für Rennen oder kurze Touren, während für längere Touren sich die größeren und schwereren Batterieeinheiten 61b und 61c mit größerer Kapazität besser eignen.

Die Elektronikeinheit 50b aus Fig. 9 kann weitgehend mit der Elektronikeinheit 50c aus Fig. 3 übereinstimmen und eine Vielzahl von Einstellmöglichkeiten bieten. Bei dieser Variante erfolgt die Steuerung durch die integrierte Steuereinrichtung 46 autark. Datenverbindungen zu einer zentralen Steuereinrichtung können während der Fahrt nicht aufgebaut werden.

In jeder Variante der Elektronikeinheiten 50a, 50b oder 50c ist ein vollautomatischer Betrieb möglich. Die Art und der Umfang der Einstellmöglichkeiten können sich jedoch stark unterscheiden. Eine Plausibilitätsprüfung ist für alle Bedienmöglichkeiten vorzugsweise vorgesehen, um unvorteilhafte, schädliche oder gefährliche Einstellungen verhindern zu können.

In einer weiteren Variante erfolgt die Steuerung der Stoßdämpfer über ein zentrales Steuergerät. Wenn beispielsweise eine Gruppe von Radfahrern bei einer geführten Tour oder im Training unterwegs ist, kann durch den Führer oder Trainer zentral für alle Fahrer die Steuerung vorgenommen werden. Auch eine Steuerung anhand zuvor abgelegter Daten ist möglich. In diesen Fällen hat jeder Fahrer auch bei unbekannten Strecken optimale Einstellungen. In einem solchen Betriebsmodus können Bedieneingaben ignoriert werden, sodass ein rein vollautomatischer Betrieb erfolgt.

Es ist in allen Fällen bevorzugt, dass eine dritte Federkammer zuschaltbar vorgesehen ist, um die Federhärte zu variieren.

**Bezugszeichenliste**

| | | | |
|---|---|---|---|
| 1 | Dämpfereinrichtung | 50a-c | Elektronikeinheit |
| 2 | Dämpfergehäuse | 51, 52 | Bedienknopf |
| 3 | erste Dämpferkammer | 54 | Netzwerkschnittstelle |
| 4 | zweite Dämpferkammer | 55 | Funknetzschnittstelle |
| 5 | Dämpferkolben | 56 | Kabelanschluss |
| 6 | Kolbenstange | 57 | grafische Bedieneinheit |
| 7 | Strömungskanal | 60 | Steuerungseinrichtung |
| 8 | Drosseleinrichtung | 61a-c | Batterieeinheit |
| 9 | Fluid | 62 | Trennelement |
| 10 | Feld | 63 | Durchmesser |
| 11, 12 | Dämpfungskanal | 65 | axiale Länge |
| 13, 14 | Felderzeugungseinrichtung | 66, 67 | Ventil |
| | | 68, 69 | Pfeil |
| 15 | erstes Ende | 70 | Internet |
| 16 | zweites Ende | 71 | Ausgleichsraum |
| 17 | erster Anschluss | 72 | Ausgleichskolben |
| 18 | zweiter Anschluss | 73-76 | Feldstärke |
| 19 | Außenseite | 77 | Zeitdauer |
| 20 | Durchmesser | 78 | Stromstärke |
| 21 | Federeinrichtung | 80 | Shim-Ventil |
| 22 | Federgehäuse | 81, 82 | Kanalgruppe |
| 23 | erste Federkammer | 83 | Trennwand |
| 24 | zweite Federkammer | 84, 85 | Teilkanal |
| 25 | Federungskolben | 90 | Dämpferkennlinie |
| 26 | Dichtung | 91 | Low-Speed-Bereich |
| 27 | Innenseite | 92 | High-Speed-Bereich |
| 28 | Durchmesser | 93 | Radius |
| 29, 30 | Durchflusskanal | 94, 95 | Steigung |
| 31 | Magneteinrichtung | 96 | Knickpunkt |
| 32 | Ringleiter | 97 | Pfeil |
| 33, 34 | Felderzeugungseinheit | 98 | Dämpferkennlinie |
| 35 | Übergangsabschnitt | 100 | Stoßdämpfer |
| 36 | Sperrabschnitt | 111 | Vorderrad |
| 37 | Durchlassabschnitt | 112 | Hinterrad |
| 38, 39 | Spule | 113 | Rahmen |
| 40, 41 | Kern | 114 | Federgabel |
| 42 | Impuls | 115 | Hinterraddämpfer |
| 43, 44 | Dauermagnet | 116 | Lenker |
| 45 | Drosselventil | 117 | Sattel |
| 46 | Steuereinrichtung | 200 | Fahrrad |
| 47 | Sensor | | |
| 48 | Bedieneinrichtung | | |
| 49 | Anzeige | | |

## Patentansprüche

1. Stoßdämpfer (100) für ein wenigstens teilweise muskelbetriebenes Fahrzeug und insbesondere ein Fahrrad (200) mit wenigstens einer Dämpfereinrichtung (1) mit einer ersten und einer zweiten Dämpferkammer (3, 4), die über wenigstens ein steuerbares Drosselventil (45) in Verbindung stehen, wobei wenigstens eine wechselbare Elektronikeinheit (50a-50c) vorgesehen ist, welche wenigstens eine Steuereinrichtung (46) umfasst, um mittels der Steuereinrichtung (46) das steuerbare Drosselventil (45) zu steuern, um die Dämpfereigenschaften zu beeinflussen und dass unterschiedliche Typen von Elektronikeinheiten (50a-50c) anschließbar sind, **dadurch gekennzeichnet dass**, die austauschbare Elektronikeinheit (50a-50c) den Einsatz einer anderen Elektronikeinheit (50a-50c) mit einer einfacheren oder komplexeren Steuereinrichtung (46) erlaubt, sodass durch einfachen Austausch der Elektronikeinheit (50a-50c) der Stoßdämpfer (100) in seiner Funktionalität und Steuerbarkeit erweitert oder beschränkt werden kann.

2. Stoßdämpfer (100) nach Anspruch 1, wobei die Dämpfereinrichtung (1) mit einem durch ein Feld (10) beeinflussbarem rheologischen Fluid (9) versehen ist und das steuerbare Drosselventil (45) wenigstens einen Dämpfungskanal (11, 12) umfasst, der durch eine Felderzeugungseinrichtung (13, 14) mit einem Feld (10) beaufschlagbar ist.

3. Stoßdämpfer (100) nach einem der vorhergehenden Ansprüche, wobei die Elektronikeinheit (50a) wenigstens eine Bedieneinrichtung (48) umfasst, welche vorzugsweise wenigstens zwei Bedienknöpfe (51, 52) und wenigstens eine Anzeige (49) aufweist.

4. Stoßdämpfer (100) nach einem der vorhergehenden Ansprüche, wobei die Elektronikeinheit (50a-50c) wenigstens eine Batterieeinheit (61a-61c) aufweist.

5. Stoßdämpfer (100) nach einem der vorhergehenden Ansprüche, wobei die Elektronikeinheit (50a-50c) als autarke Einheit vorgesehen ist.

6. Stoßdämpfer (100) nach einem der vorhergehenden Ansprüche, wobei die Elektronikeinheit (50b, 50c) zum Datenaustausch mit wenigstens einer weiteren Steuerungseinrichtung vorgesehen ist.

7. Stoßdämpfer (100) nach einem der vorhergehenden Ansprüche, wobei die Elektronikeinheit (50b, 50c) zum Datenaustausch mit wenigstens einer Netzwerkschnittstelle (54) ausgerüstet ist, welche zum drahtgebundenen und/oder drahtlosen Datenaustausch ausgebildet ist.

8. Stoßdämpfer (100) nach einem der vorhergehenden Ansprüche, wobei die Elektronikeinheit (50) anhand von Vorgaben einer zentralen Steuerungseinheit (60) zur lokalen Steuerung des Stoßdämpfers (100) ausgebildet ist.

9. Stoßdämpfer (100) nach einem der vorhergehenden Ansprüche, wobei die zentrale Steuerungseinheit (60) mit einer grafischen Ausgabe (49) ausgerüstet ist.

10. Stoßdämpfer (100) nach einem der vorhergehenden Ansprüche, wobei wenigstens ein Sensor (47) vorgesehen ist, welcher einer Gruppe von Sensoren (47) entnommen ist, welche Lage- und Höhensensoren wie GPS-Sensoren, Geschwindigkeits- und Beschleunigungssensoren, Drehmoment- und Gewichtssensoren, Drucksensoren und Positionssensoren umfasst.

11. Stoßdämpfer (100) nach einem der vorhergehenden Ansprüche, wobei die Batterieeinheit (61a-61c) austauschbar vorgesehen ist, wobei insbesondere Batterieeinheiten unterschiedlicher Kapazität vorgesehen sind.

12. Stoßdämpfer (100) nach einem der vorhergehenden Ansprüche, wobei die Elektronikeinheit (50a-50c) mit unterschiedlichen Typen von Batterieeinheiten (61a-61c) ausrüstbar ist, wobei insbesondere Einwegbatterien (61a), wiederaufladbare Batterien (61b) und Brennstoffzellen (61c) vorgesehen sind.

## Claims

1. Shock absorber (100) for an at least partially muscle-powered vehicle and in particular a bicycle (200) having at least one damper device (1) with a first and a second damper chamber (3, 4) being in connection via at least one controllable throttle valve (45), wherein at least one changeable electronic unit (50a-50c) is provided comprising at least one control device (46) to control the controllable throttle valve (45) by means of the control device (46) for influencing the damper properties and wherein different types of electronic units (50a-50c) can be connected,
**characterized in that** the changeable electronic unit (50a-50c) allows to use another electronic unit (50a-50c) having a simpler or more complex control device (46), such that simple replacement of the electronic unit (50a-50c) allows to expand or restrict the function and control options of the shock absorber (100) .

2. The shock absorber (100) according to claim 1 wherein the damper device (1) is provided with a rheological fluid (9) that can be influenced by a field (10) and wherein the controllable throttle valve (45) comprises at least one damping duct (11, 12) to which a field (10) can be applied by way of a field generating device (13, 14).

3. The shock absorber (100) according to any of the preceding claims wherein the electronic unit (50a) comprises at least one operating device (48) which preferably includes at least two operating knobs (51, 52) and at least one display (49).

4. The shock absorber (100) according to any of the preceding claims wherein the electronic unit (50a-50c) includes at least one battery unit (61a-61c).

5. The shock absorber (100) according to any of the preceding claims wherein the electronic unit (50a-50c) is provided as an autonomous unit.

6. The shock absorber (100) according to any of the preceding claims wherein the electronic unit (50b, 50c) is provided for data exchange with at least one further control device.

7. The shock absorber (100) according to any of the preceding claims wherein the electronic unit (50b, 50c) is equipped for data exchange with at least one network interface (54) configured for wire-bound and/or wireless data exchanges.

8. The shock absorber (100) according to any of the preceding claims wherein the electronic unit (50) is configured for local control of the shock absorber (100) by way of specifications of a central control unit (60).

9. The shock absorber (100) according to any of the preceding claims wherein the central control unit (60) is equipped with a graphic display (49).

10. The shock absorber (100) according to any of the preceding claims wherein at least one sensor (47) is provided taken from a group of sensors (47) including location and altitude sensors such as GPS sensors, speed and acceleration sensors, torque and weight sensors, pressure sensors and position sensors.

11. The shock absorber (100) according to any of the preceding claims wherein the battery unit (61a-61c) is provided exchangeable wherein in particular battery units having various capacities are provided.

12. The shock absorber (100) according to any of the preceding claims wherein the electronic unit (50a-50c) can be equipped with various types of battery units (61a-61c) wherein in particular disposable batteries (61a), rechargeable batteries (61b), and fuel cells (61c) are provided.

## Revendications

1. Absorbeur de choc (100) pour un véhicule entraîné au moins partiellement par force musculaire, et notamment pour un vélo (200) doté d'au moins un dispositif d'amortissement (1) avec une première et une deuxième chambre d'amortisseur (3, 4), lesquelles sont reliées par au moins une vanne d'étranglement (45) contrôlable, au moins une unité électronique (50a-50c) changeable étant prévue, laquelle comprend au moins un dispositif de contrôle (46) pour contrôler, au moyen du dispositif de contrôle (46), la vanne d'étranglement (45) contrôlable afin d'influer sur les caractéristiques d'absorbeur, et plusieurs types d'unités électroniques (50a-50c) différentes pouvant être raccordés, **caractérisé en ce que** l'unité électronique interchangeable (50a-50c) permet d'utiliser une autre unité électronique (50a-50c) dotée d'un dispositif de contrôle (46) plus simple ou plus complexe de telle sorte que grâce à un simple changement de l'unité électronique (50a-50c), l'absorbeur de choc (100) peut être élargi ou limité dans ses fonctions et son contrôle.

2. Absorbeur de choc (100) selon la revendication 1, le dispositif d'amortissement (1) étant muni d'un fluide (9) rhéologique pouvant être soumis à un champ (10) et la vanne d'étranglement (45) contrôlable comprenant au moins un canal d'amortissement (11, 12) auquel peut être appliqué un champ (10) grâce à un dispositif de génération de champ (13, 14).

3. Absorbeur de choc (100) selon l'une quelconque des revendications précédentes, l'unité électronique (50a) comprenant au moins un dispositif de commande (48) qui présente de préférence au moins deux boutons de commande (51, 52) et au moins un affichage (49).

4. Absorbeur de choc (100) selon l'une quelconque des revendications précédentes, l'unité électronique (50a-50c) présentant au moins une unité de batterie (61a-61c).

5. Absorbeur de choc (100) selon l'une quelconque des revendications précédentes, l'unité électronique (50a-50c) étant prévue en tant qu'unité autosuffisante.

6. Absorbeur de choc (100) selon l'une quelconque des revendications précédentes, l'unité électronique (50b-50c) étant prévue pour échanger des données avec au moins un autre dispositif de contrôle.

7. Absorbeur de choc (100) selon l'une quelconque des revendications précédentes, l'unité électronique (50b, 50c) étant équipée, pour l'échange de données, d'au moins une interface de réseau (54) qui est conçue pour un échange de données filaire et/ou sans fil.

8. Absorbeur de choc (100) selon l'une quelconque des revendications précédentes, l'unité électronique (50) étant conçue pour le contrôle local de l'absorbeur de choc (100) sur la base de règles édictées par une unité de contrôle centrale (60).

9. Absorbeur de choc (100) selon l'une quelconque des revendications précédentes, l'unité de contrôle centrale (60) étant équipée d'une édition graphique (49).

10. Absorbeur de choc (100) selon l'une quelconque des revendications précédentes, au moins un capteur (47) étant prévu, lequel est choisi à partir d'un groupe de capteurs (47) comprenant des capteurs de position et de hauteur tels que capteurs GPS, capteurs de vitesse et d'accélération, de couple de rotation et de poids, de pression et de position.

11. Absorbeur de choc (100) selon l'une quelconque des revendications précédentes, l'unité de pile (61a-61c) étant prévue pour être changée, des unités de piles de capacités différentes étant notamment prévues.

12. Absorbeur de choc (100) selon l'une quelconque des revendications précédentes, l'unité électronique (50a-50c) pouvant être équipée de différents types d'unités de piles (61a-61c), étant prévues notamment des piles jetables (61a), des piles rechargeables (61b) et des piles à combustible (61c).
